# EUROPÄISCHE PATENTSCHRIFT

(11) **EP 3 759 773 B1**
(45) Veröffentlichungstag und Bekanntmachung des Hinweises auf die Patenterteilung: **13.07.2022**
(21) Anmeldenummer: 19805648.3
(22) Anmeldetag: 18.11.2019
(51) Int. Cl.: H01T 1/02, H01T 1/14, H01T 2/02, H01T 4/14, H01H 9/32, H01H 9/46, H01H 85/44

(54) **ÜBERSPANNUNGSSCHUTZANORDNUNG MIT EINER IN EINEM ISOLIERENDEN GEHÄUSE BEFINDLICHEN HÖRNERFUNKENSTRECKE MIT DEIONKAMMER ZUR LICHTBOGENLÖSCHUNG**
OVER-VOLTAGE PROTECTION ARRANGEMENT HAVING A HORN SPARK GAP LOCATED IN AN INSULATING HOUSING HAVING A DEIONIZATION CHAMBER FOR ARC EXTINGUISHING
DISPOSITIF DE PROTECTION DE SURTENSION DOTÉ D'UN ÉCLATEUR À CORNES SITUÉ DANS UN BOÎTIER ISOLANT ET DOTÉ D'UNE CHAMBRE DE DÉSIONISATION POUR EXTINCTION D'ARC

(30) Priorität: 17.01.2019 DE 102019101200
(43) Veröffentlichungstag der Anmeldung: 06.01.2021
(73) Patentinhaber: DEHN SE, 92318 Neumarkt i.d. OPf. (DE)
(72) Erfinder: EHRHARDT, Arnd, 92318 Neumarkt (DE); HIRSCHMANN, Helmut, 92348 Berg (DE); HAAS, Sebastian, 91249 Weigendorf (DE); WITTMANN, Georg, 92283 Lauterhofen (DE)
(74) Vertreter: Isarpatent
(86) Internationale Anmeldenummer: PCT/EP2019/081584
(87) Internationale Veröffentlichungsnummer: WO 2020/147999

(56) Entgegenhaltungen:
- DE-A1- 4 435 968
- DE-A1-102011 051 738
- DE-A1-102011 102 257
- DE-A1-102013 112 400

## Beschreibung

Die Erfindung betrifft eine Überspannungsschutzanordnung gemäß dem Oberbegriff des Anspruches 1, wie aus der DE 10 2011 051 738 A1 bekannt.

Hörnerfunkenstrecken mit Deionkammer zur Lichtbogenlöschung sind beispielsweise aus der DE 10 2011 051 738 A1 vorbekannt. Eine diesbezügliche Hörnerfunkenstrecke befindet sich in einem Gehäuse und weist Mittel zur Steuerung der internen Gasströmung zur Einstellung eines unterschiedlichen Verhaltens des bei einer Impulsstrombelastung entstehenden Lichtbogens einerseits sowie des netzfolgestrombedingten Lichtbogens andererseits auf.

Bei einer bekannten Hörnerfunkenstrecke ist im Zündbereich eine Triggerelektrode anordenbar. Diese Triggerelektrode kann ein leitfähiges Element umfassen, welches von einer Gleitstrecke umgeben ist. Ebenso können benachbarte Gleitstrecken aus einem isolierenden oder halbleitenden Material bestehen. Die bekannte Triggerelektrode ist entweder an einer der beiden Elektroden im Zündbereich eingesetzt oder zwischen den beiden Elektroden der Hörnerfunkenstrecke, bevorzugt im unteren Bereich des Zündbereiches, angeordnet.

Die DE 195 45 505 C1 zeigt einen Überspannungsableiter mit mindestens einem spannungsabhängigen Widerstand, zum Beispiel einem Varistor und thermischen Abschaltvorrichtungen.

Diese Abschaltvorrichtungen bestehen einerseits aus einem Sicherungsstreifen sowie andererseits aus einer Thermoauslösung mit eutektischer Schmelzlegierung.

Mit dem Auftrennen des Sicherungsstreifens oder der Thermosicherung wird mit Hilfe einer Federkraft ein Schadensanzeiger betätigt. Ein Schadensfall ist damit sichtbar. Um sowohl im Falle eines durch Alterung entstehenden unzulässigen Leckstromes des Varistors als auch im Falle eines zu hohen, einen Kurzschluss im Varistor erzeugenden Stoßstromes mit einfachen Mitteln in raumsparender Bauweise für eine Anzeige des eingetretenen Fehlerfalles zu sorgen, ist ein Gehäuse vorgesehen, in dem sich ein stoßstromfester Sicherungsstreifen befindet. Der Schadensanzeiger ist ein gesondertes, am Gehäuse lösbar befestigter und nach Lösung einer Feder relativ zum Sicherungsgehäuse bewegbares Bauteil.

Aus der DE 10 2014 215 282 B3 ist ein kombiniertes Überspannungsschutzgerät mit einer integrierten Funkenstrecke vorbekannt. Die Funkenstrecke weist eine in Reihe geschaltete Schmelzsicherung auf, wobei die Reihenschaltung an ein Versorgungsnetz mit einem ersten Potential und einem hiervon verschiedenen zweiten Potential anschließbar ist. Die Funkenstrecke weist zwei Hauptelektroden auf, die sich in einem Gehäuse befinden.

Der dortige Schmelzleiter verbindet einen ersten Anschluss mit der zweiten Hauptelektrode der Funkenstrecke, wobei die Schmelzsicherung weiterhin einen weiteren Kontakt aufweist, wobei der weitere Kontakt isoliert zum ersten Kontakt und isoliert zur zweiten Hauptelektrode der Funkenstrecke angeordnet ist. Das Überspannungsschutzgerät weist darüber hinaus einen Plasmakanal auf, der aus dem Brennraum der Funkenstrecke so in die Nachbarschaft des Schmelzleiters führt, dass Plasma auf den Schmelzdraht gezielt degradierend einwirken kann. Infolgedessen kann der Schmelzdraht einer Zerstörung unterliegen.

Ausgehend vom geschilderten Stand der Technik ist es Aufgabe der Erfindung, eine weiterentwickelte Überspannungsschutzanordnung, umfassend eine in einem isolierenden Gehäuse befindliche Hörnerfunkenstrecke mit Deionkammer zur Lichtbogenlöschung anzugeben, wobei eine vorhandene Triggerung definiert bei Überlastung der Funkenstrecke abschaltbar ist, und zwar ohne dass die Funkenstrecke bei einer nachfolgenden Aktivierung Fehlfunktionen zeigt. Dabei soll das Abtrennen der Triggerschaltung bevorzugt auf eine vom normalen Verhalten der Funkenstrecke abweichende Belastung mit Netzfolgestrom ausgerichtet werden.

Die Erfindung schafft eine Überspannungsschutzanordnung gemäß Anspruch 1, wobei die Unteransprüche mindestens zweckmäßige Ausgestaltungen und Weiterbildungen umfassen.

Ausgehend von der an sich bekannten Überspannungsschutzanordnung umfassend eine in einem isolierenden Gehäuse befindliche Hörnerfunkenstrecke mit Deionkammer und im Zündbereich befindlicher Triggerelektrode ist eine spezielle Abtrennvorrichtung auf der Basis eines Schmelzleiters vorhanden. Der Schmelzleiter befindet sich bei einer bevorzugten Ausführungsform im Bereich der Deionkammer und ist dort einer netzfolgestrombedingten Belastung ausgesetzt.

Der erfindungsgemäße Gedanke besteht also darin, einen Schmelzleiterdraht mit definiertem Schmelzintegralwert einzusetzen, um die Belastung einer Funkenstrecke, welche einen Lichtbogenlaufbereich und eine Deionkammer aufweist, zu bewerten.

Mit dem Erreichen eines Grenzwertes schmilzt der Schmelzleiter und löst die erwähnte Abtrennvorrichtung aus, die die Triggerschaltung der Funkenstrecke deaktiviert und gegebenenfalls gleichzeitig eine Anzeige betätigt.

Der vorerwähnte Grenzwert kann durch die Drahteigenschaften, die Art der Kontaktierung und die Positionierung des Schmelzleiters innerhalb der Funkenstrecke bestimmt werden. Hierdurch ist eine sehr genaue Abstimmung auf die Höhe und die Art der Belastung der Funkenstrecke möglich. Der Grenzwert soll sich bevorzugt auf die Belastung durch einen Netzfolgestrom beziehen.

Das Schmelzen des drahtförmigen Schmelzleiters wird beispielsweise durch eine Strombelastung, eine thermische Belastung oder aber auch den Lichtbogenabbrand bewirkt. In einer Ausführungsform der Erfindung kann der Schmelzleiter zusätzlich thermosensibel fixiert werden.

Bei einer Ausgestaltung der Erfindung kann die Triggerelektrode über ein spannungsbegrenzendes oder spannungsschaltendes Element mit einer der Hauptelektroden der Hörnerfunkenstrecke in Verbindung stehen und diese Verbindung mittels des Abtrennelementes unterbrochen werden.

Gemäß einem Kerngedanken der Erfindung ist der Schmelzleiter mit beabstandeten Löschblechen der Deionkammer kontaktiert.

Der Schmelzleiter kann im Lichtbogeneinlaufbereich der Deionkammer angeordnet werden.

Das Abtrennelement ist von einem Schmelzleiter ebenso auslösbar, welcher sich oberhalb eines Zündbereiches der Hörnerfunkenstrecke in einem dort vorhandenen Volumen befindet.

Der Schmelzleiter kann aber auch an einer der Laufschienen bzw. Hörnerelektroden der Funkenstrecke angeschlossen werden.

Bei einer Ausgestaltung der Erfindung ist der Schieber seitlich, neben der Deionkammer angeordnet.

Der Schieber kann aber auch weitgehend innerhalb der Deionkammer angeordnet werden.

Bei einer Weiterbildung der Erfindung ist der Schmelzleiter potentialfrei im Lichtbogenlaufbereich oder der Deionkammer angeordnet.

Bei teilweiser Führung des Schmelzleiters außerhalb der Deionkammer zum Aktivieren des Abtrennelementes können Einströmöffnungen oder Einströmkanäle für ein bei einer externen Lichtbogenbildung entstehendes Plasma ausgebildet werden.

Mit der vorgestellten Lösung wird eine Abtrennung der Triggerschaltung von der Hörnerfunkenstrecke mit Lösch- oder Deionkammer so erreicht, dass die Funkenstrecke nach der Abtrennung noch nicht irreversibel geschädigt ist.

Erfolgt die Abtrennung der Triggerschaltung zeitversetzt aufgrund der mechanischen Bewegung des Abtrennelementes und der damit verbundenen Verzugszeit, ist sichergestellt, dass auch eine nachfolgende Aktivierung der Funkenstrecke nicht zu einer Fehlfunktion oder Überlastung führt.

Durch die erfindungsgemäße Abtrennung der Triggerschaltung und die Ausbildung der Funkenstrecke im Zündbereich ist gewährleistet, dass die Ansprechspannung der dann quasi passiven Funkenstrecke mindestens der Höhe der im Anwendungsumfeld üblichen Impuls- und Stehspannungsfestigkeit entspricht. Hier können insbesondere die Luft- und Kriechstrecken unter Beachtung des Verschleißes der Funkenstrecke bis zum Ansprechen der Schutzeinrichtung zur Auslegung herangezogen werden.

Die erfindungsgemäße Überspannungsschutzanordnung auf der Basis einer triggerbaren Funkenstrecke kann als Einzelfunkenstrecke aber auch bevorzugt in Reihenschaltung mit einer weiteren Funkenstrecke oder Überspannungsschutzeinrichtung eingesetzt werden.

Die Abstimmung des Schmelzleiters und dessen Positionierung kann hierbei auf die Leistungsfähigkeit der Funkenstrecke selbst, auf die Leistungsfähigkeit der Reihenschaltung bzw. auch auf die Leistungsfähigkeit des in Reihe geschalteten Überspannungsschutzelementes ausgerichtet werden.

Die Auslösung der Triggerschaltung durch den Schmelzleiter wird bevorzugt auf eine vom normalen Verhalten abweichende Belastung mit Netzfolgestrom ausgerichtet. Als Kriterien hierfür können das prinzipielle Auftreten von Folgestrom, welcher zumindest bis zum Laufbereich der Funkenstrecken bzw. bevorzugt in die Löschkammer einläuft oder zusätzlich auch das Überschreiten einer bestimmten Stromstärke bzw. der spezifischen Energie des Folgestromes gewählt werden.

Bei einer Reihenschaltung mit einem Varistor kann die Abstimmung im Hinblick auf das Auftreten von einem Folgestrom im Laufbereich der Funkenstrecke oder in der Löschkammer erfolgen. Varistoren können netzfrequente Folgeströme nur bis zu einer begrenzten Höhe und Zeitdauer führen. Das Auftreten von hohen Folgeströmen, zum Beispiel von mehreren zehn oder einhundert Ampere lässt auf ein fehlerhaftes Verhalten bzw. eine Überlastungsgefahr schließen.

Varistoren können jedoch sehr hohe Impulsströme geringer Energie (zum Beispiel 8/20 µs) und mittlere Impulsströme großer Energie (zum Beispiel 10/350 µs) mehrfach ableiten. Eine Aktivierung der Abtrenneinrichtung der Funkenstrecke wird bei diesen Belastungen nicht bewirkt.

In einer triggerbaren Funkenstrecke führen aber bereits kleine Impulsströme, welche noch deutlich unterhalb der Belastbarkeit von Varistoren liegen, zu einer Lichtbogenbildung, ebenso, wenn ein Netzfolgestrom auftritt.

Der eingesetzte Schmelzleiter in der Funkenstrecke ist in der Lage, geringfügige Belastungen von fehlerhaften Belastungen quasi unterscheiden zu können. Wird der Schmelzleiterdraht der direkten Lichtbogeneinwirkung auch bei Impulsbelastungen ausgesetzt, ist eine Unterscheidung über die Belastbarkeit einstellbar.

Die erfindungsgemäße Lehre zielt insbesondere auf das Abschalten der Triggereinrichtung infolge einer Folgestrombelastung. Selbstverständlich kann ausgestaltend die Triggerschaltung auch bei anderen Kriterien, die zum Beispiel auf Impulsbelastungen beruhen, abgetrennt werden.

Ausgehend von der erfindungsgemäß weitergebildeten Hörnerfunkenstrecke, die einen Zündbereich, einen Lichtbogenlaufbereich und eine Löschkammer, insbesondere eine Deionkammer aufweist, wurde festgestellt, dass das Laufverhalten des Lichtbogens sich bei Folgestrombelastung deutlich von einer Impulsbelastung unterscheidet. Dieses unterschiedliche Laufverhalten des Lichtbogens wird zum Auslösen des Abtrennelementes genutzt.

Die Erfindung soll nachstehend anhand eines Ausführungsbeispieles sowie unter Zuhilfenahme von Figuren näher erläutert werden.

Hierbei zeigen:
- Fig. 1: eine beispielhafte Anordnung mit Hörnerfunkenstrecke, Triggerschaltung, Lichtbogenlaufbereich und Lösch- bzw. Deionkammer nebst der erfindungsgemäßen Bewertungseinheit auf der Basis eines Schmelzleiters;
- Fig. 2a: eine Weiterbildung der in der Fig. 1 gezeigten Lösung mit einem Schmelzleiter im Einlaufbereich der Deionkammer sowie einem weiteren Schmelzleiter im Volumen oberhalb des Zündbereiches;
- Fig. 2b: einen Querschnitt einer Funkenstrecke, ähnlich derjenigen nach Fig. 2a;
- Fig. 3a und b: Ansichten einer beispielhaften Ausführungsform mit Unterbrechung oder Isolation in einer der Hörnerelektroden und dort angeschlossenem Schmelzleiter;
- Fig. 4: eine prinzipielle Darstellung einer Hörnerfunkenstrecke mit Deionkammer und Löschblechen, wobei der Schmelzleiter direkt zwischen zwei benachbarten Löschblechen angeschlossen ist;
- Fig. 5: eine beispielhafte Darstellung einer Hörnerfunkenstrecke mit Draufsicht auf die Löschbleche einer Deionkammer und seitlich, den Löschblechen benachbart ausgeführtem Abtrennelement in Form eines federkraftvorgespannten Schiebers;
- Fig. 6: eine Anordnung einer Funkenstrecke mit Schmelzleiter und Abtrennvorrichtung, wobei ein mechanisch vorgespannter Schieber vorgesehen ist, der Schmelzleiter den vorgespannten Schieber fixiert und Einströmöffnungen oder Einströmkanäle für ein bei einer externen Lichtbogenbildung entstehendes Plasma ausgebildet sind, so dass das Plasma in den Bereich zwischen den Löschblechen gelangt; und
- Fig. 7: eine Darstellung eines beispielhaften Löschbleches bzw. einer Deionplatte, welche Öffnungen aufweist, durch die der Schmelzleiter oder ein Hilfsschmelzleiter geführt ist, um die Lichtbogenbildung in der Kammer zu verbessern.

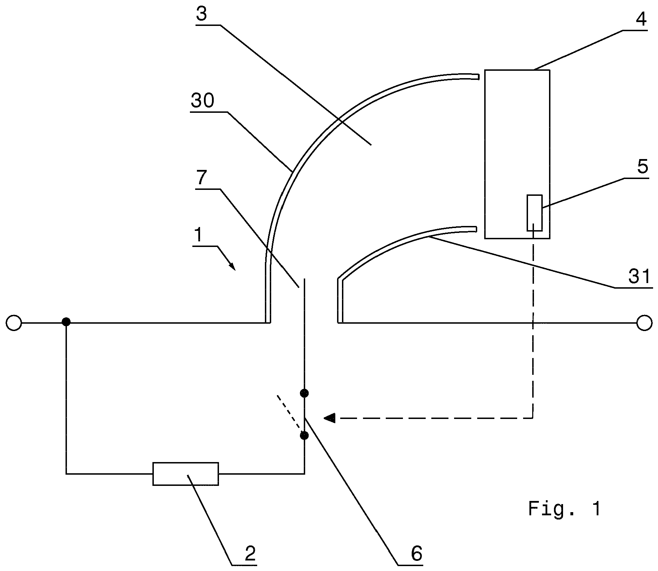

Die Überspannungsschutzanordnung gemäß Figur 1 geht aus von einer Funkenstrecke 1, welche eine Triggerschaltung 2 besitzt. Die Funkenstrecke weist zwei stilisiert dargestellte, bogenförmige Hörnerelektroden 30, 31 auf, die einen Lichtbogenlaufbereich 3 einschließen. Eine Zünd- oder Hilfselektrode 7 ist im Fußbereich der Hörnerelektroden 30; 31 befindlich und steht mit der Triggerschaltung 2 in Verbindung.

Ein Abtrennelement 6, zum Beispiel ausgebildet als Schalter, kann die Verbindung zwischen der Zündelektrode oder Hilfselektrode 7 und der Triggerschaltung 2 unterbrechen.

Dem Lichtbogenlaufbereich 3 schließt sich eine Deion- oder Löschkammer 4 an, die eine Vielzahl von Deion- oder Löschblechen aufnimmt (nicht gezeigt).

Im Bereich der Deionkammer 4 ist eine Bewertungseinheit 5 befindlich.

Diese Bewertungseinheit 5 besteht aus einem Schmelzleiter in Drahtform. Bei Überlastung des Schmelzleiters erfolgt symbolisiert über die Pfeildarstellung eine Aktivierung des Abtrennelementes bzw. Schalters 6 zur Unterbrechung der Triggerung.

Der in der Figur 1 nicht gezeigte Schmelzleiter als wesentliches Bestandteil der Bewertungseinrichtung 5 ist bevorzugt in der Deionkammer 4 der Funkenstrecke 1 angeordnet.

Die Funkenstrecke 1 ist dabei so ausgeführt, dass kurzzeitige Impulsströme nicht in die Deionkammer 4 einlaufen und das Einlaufen bei längeren Impulsströmen nur unter bestimmten Bedingungen bzw. stromabhängig möglich ist.

Folgeströme gelangen aufgrund der Unterstützung des Eigenmagnetfeldes beispielsweise durch Konzentratorbleche (nicht gezeigt) auch bei sehr kleinen Stromstärken von wenigen 10 A innerhalb weniger Millisekunden in die Deionkammer 4.

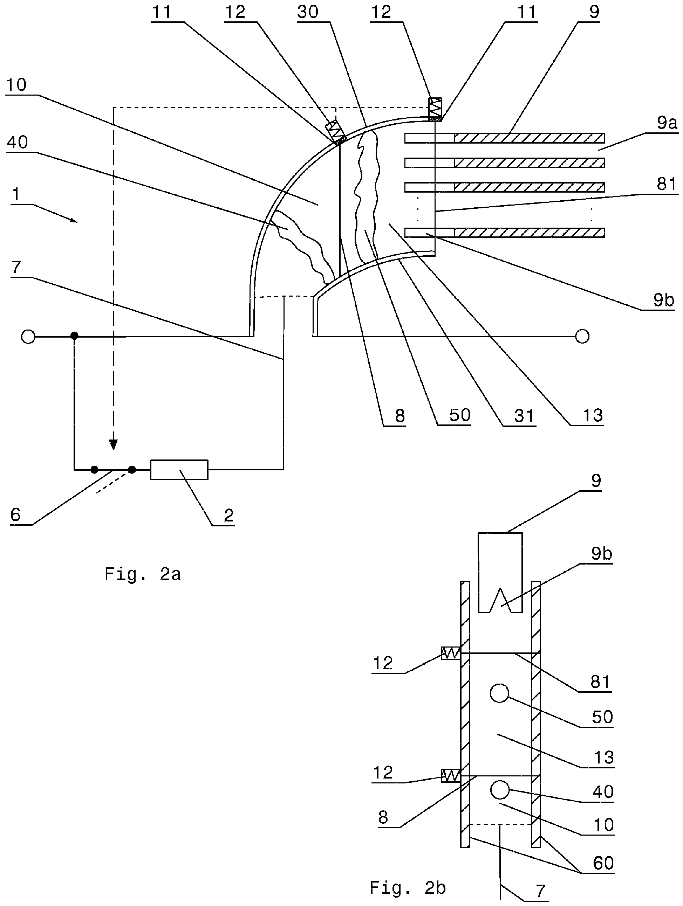

Figuren 2a, b zeigen eine Ausbildung der Anordnung von Schmelzleitern 8; 81 auf der Basis des zur Figur 1 beschriebenen Prinzips.

Es wird demnach wiederum von einer Funkenstrecke 1 mit Hörnerelektroden 30; 31 ausgegangen, wobei zwischen einem elektrischen Außenanschluss und der Zündelektrode 7 die bereits erwähnte Triggerschaltung 2 vorhanden ist, die über eine Schalteinrichtung 6 abtrennbar ist.

Ein Schmelzleiter 81 als Auslösedraht ist innerhalb einer Deionkammer 4 (siehe Figur 1) befindlich, wobei die Deionkammer die Löschbleche 9 mit einem Einlaufbereich 9b und einem Austrittsbereich 9a umfasst.

Mit dem Bezugszeichen 10 ist das Volumen bezeichnet, welches üblicherweise Impulslichtbögen aufweist. Mit dem Bezugszeichen 13 ist der Lichtbogenlaufbereich des Folgestromlichtbogens angedeutet.

Die Elektroden 30 und 31 sind divergierend ausgeführt, wobei oberhalb des Zündbereiches sich das erwähnte Volumen 10 befindet, in welchem die Impulslichtbögen zu einer starken Ionisierung und thermischen Belastung der Funkenstrecke führen.

Wird der Schmelzleiter 8 in diesem Volumen platziert, ist eine Dimensionierung notwendig, welche bei mehreren Impulsströmen im Nennbereich nicht zu einer Auslösung führt. Die Auslösung soll erst dann bei Impulsströmen oberhalb des Nennbereiches bzw. durch Netzfolgeströme erfolgen. Der Schmelzleiter 8 ist beispielhaft gemäß Figur 2 zwischen den Laufschienen bzw. Hörnerelektroden 30; 31 der Funkenstrecke 1 gespannt und auf mindestens einer Seite mit einer Isolation 11 versehen. Die mechanische Vorspannung des Schmelzleiters bzw. Auslösedrahtes 8 erfolgt über eine Feder 12, die sich außerhalb des Lichtbogenbereiches befindet.

Die Auslösung des Schmelzleiters in diesem Bereich ist insbesondere bei energiearmen Impulsen, wie sie in Kombination mit Varistoren auftreten, möglich. Bei energiestarken Impulsströmen und betriebsbedingt auftretenden Netzfolgeströmen einer einfachen Funkenstrecke ist die Auslegung schwieriger, so dass gegebenenfalls zusätzliche Maßnahmen zum Schutz des Drahtes vorzusehen sind. Es wird daher der Positionierung des Schmelzleiters gemäß Bezugszeichen 81 der Vorzug gegeben.

An den Bereich 10 schließt sich zwischen den Hörnerelektroden 30; 31 der Bereich 13 innerhalb der Funkenstrecke 1 an. In diesen Bereich gelangen bei der Funkenstrecke nur solche Lichtbögen, die sich entlang der Laufschienen, das heißt der Elektroden bewegen. Entsprechend der vorangegangenen Ausführungen tritt ein Lichtbogen in dem Bereich 13 nur bei Netzfolgeströmen auf.

Mit dem Einlaufen des Lichtbogens im Bereich 9b wird der Schmelzleiter 81 vom Lichtbogen erfasst, wodurch dieser schmilzt und das Abtrennelement bzw. den Schalter 6 betätigt.

Ein Stromfluss durch den Schmelzleiter 81 kann die Überlastung desselben gezielt unterstützen, ist jedoch nicht zwingend erforderlich.

Die gezeigte Anordnung gemäß Figur 2a bzw. 2b kann auch bei Löschkammern in Form von Mäanderkammern oder Isolierstegkammern genutzt werden.

In den Figuren 2a und 2b ist beispielhaft die Lage eines Lichtbogens 40 im Bereich 10 und eines Lichtbogens 50 im Bereich 13 angedeutet.

Die Deionplatten 9 gemäß Figur 2b verfügen über einen Einlaufbereich 9b, welcher im Volumen 13 beginnt.

Der Schmelzdraht 81 ist hierbei in einer Laufschiene isoliert gehalten und von der Feder 12 vorgespannt.

Die Isolierung des Schmelzleiters 81 zur Laufschiene kann neben der Vermeidung eines Kurzschlusses auch die Funktion eines spannungsschaltenden Elementes übernehmen, so dass sich eine Sicherheitsfunktion ergibt. Übersteigt die anlegende Spannung beispielsweise den ausgewiesenen Schutzpegel des Ableiters, kann eine Abschaltung ausgelöst werden.

Alternativ besteht die Möglichkeit, den Schmelzleiter 8; 81 auch beidseitig gegenüber den Hörnerelektroden 30; 31 isoliert zu befestigen. Beim Einlaufen des Lichtbogens wird dieser der thermischen Wirkung desselben ausgesetzt. In Figur 2b ist beispielhaft der Draht 81 nur nahe des Einlaufbereiches 9b der Deionkammer zwischen den Laufschienen bzw. den Elektroden der Funkenstrecke 1 geführt.

Die Figur 2b zeigt einen Querschnitt der Hörnerfunkenstrecke mit den Bereichen 10 und 13 und den Löschblechen 9 der Deionkammer. Die Figur 2b zeigt hierbei eine Positionierung des Schmelzleiters 8 bzw. 81 quer zur Deionkammer mit seitlicher Anbindung bezogen auf die Begrenzungswände 60 des Lichtbogenlaufbereiches und mechanischer Vorspannung 12.

Gemäß den Erläuterungen zu den Figuren 2a und 2b wird der Schmelzleiter 8; 81 bzw. Teile davon stets dem Lichtbogen, zumindest jedoch dem Folgestromlichtbogen direkt ausgesetzt. Dies ist bei dem Ziel der Unterscheidung Folgestrom oder Impulsstrom unkritisch. Bei mehrfachen Folgestrombelastungen muss jedoch eine Alterung berücksichtigt werden. Es ist möglich, den Schmelzleiter so anzuordnen, dass die Überlastung im Wesentlichen nur durch den Stromfluss durch den Schmelzleiter und nicht durch die Lichtbogenwirkung erzielt wird.

Neben einer direkten Kontaktierung des Drahtes 81 im Laufbereich 13 oder im Einlaufbereich der Deionkammer kann auch eine Unterbrechung in der Laufschiene bzw. der Hörnerelektrode oder ein isoliert eingebrachter Kontakt genutzt werden, um einen Schmelzleiter erst bei Folgestrom und einer gewissen Laufstrecke zu belasten.

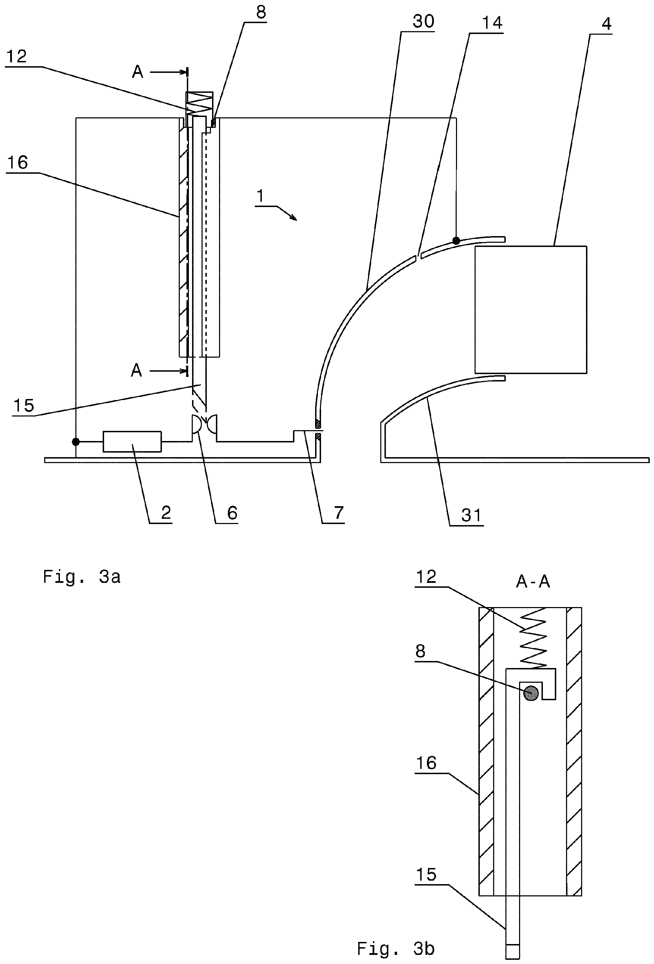

Eine derartige prinzipielle Anordnung zeigt die Figur 3a/3b beispielhaft.

In einer Hörnerelektrode 30 ist hierzu eine Unterbrechung 14 oder eine Isolation eingebracht. Es besteht aber auch die Möglichkeit, einen isolierten Kontakt an oder in der Hörnerelektrode vorzusehen. Der Bereich der Kontaktierung liegt oberhalb des Volumens 10 und somit im Bereich 13 (siehe Figur 2a) oder aber dicht neben der Deionkammer 4.

Im Bereich oder Volumen 13 ist der auftretende Folgestrom kaum reduziert, was von Vorteil ist.

Ein in der Figur 3a und 3b gezeigter Schieber 15 ist federvorgespannt am Schmelzleiter 8 fixiert und über eine Schlittenanordnung 16 geführt. Der Schieber 15 öffnet bei Auslösung den Schalter 6 und unterbricht die Triggereinrichtung 2 der Funkenstrecke 1.

Die Seitenansicht nach Figur 3b zeigt eine beispielhafte Fixierung des Schiebers 15 am Draht 8.

Die Betätigung des Schalters kann auch über einen ausgelösten Schlagbolzen oder dergleichen Mittel erfolgen. Auch kann der Schalter 6 verriegelt werden.

Seitlich neben der Deionkammer angeordnete Triggerschaltungen weisen den Vorteil eines geringen Platzbedarfes und einer geringeren Teileanzahl auf und erfordern keine Kraft- bzw. Wirkrichtungsumlenkung. Diesbezüglich muss der Schmelzleiter entsprechend geführt werden.

Gegebene ungünstige Belastungsverhältnisse des Schmelzleiters können durch die Möglichkeiten zur Einstellung des Auslöseverhaltens überwunden werden.

Bei einer Ausgestaltung kann der Schmelzleiter direkt mit Löschblechen innerhalb der Deionkammer 4 kontaktiert sein und mindestens zwei Löschbleche brücken, wodurch bei Kontakt des Lichtbogens mit den entsprechenden Löschblechen zumindest ein Teilstrom oder aber auch ein kompletter Strom über den Schmelzleiter fließt.

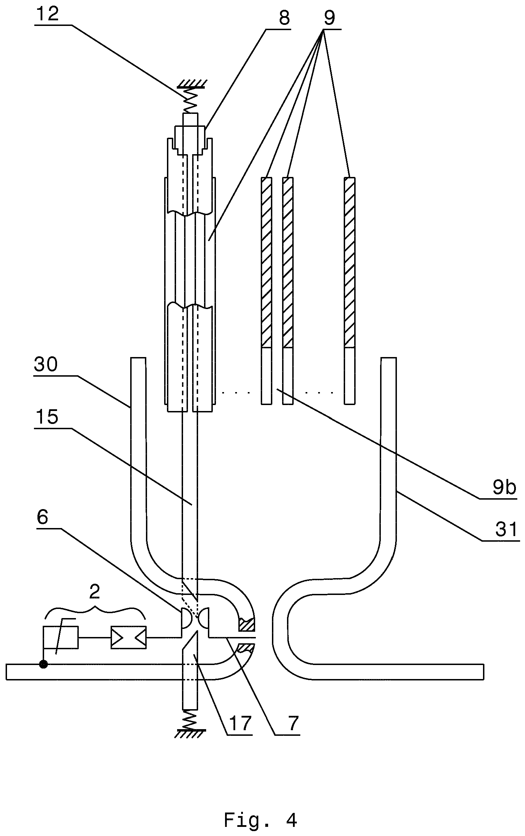

Eine diesbezügliche prinzipielle Grundanordnung ist in der Figur 4 dargestellt.

Das als Schalter ausgebildete Abtrennelement 6 der Triggerschaltung ist beispielsweise als Klemmkontakt ausführbar, der durch einen Schieber 15, der unter Federkraft 12 steht, beim Auslösen des Schmelzleiters 8 unterbrochen wird.

Der Schieber 15 besitzt hierbei eine hinreichende Vorspannung, um die Kontaktkraft der Kontakte des Schalters 6 zu überwinden.

Der Schieber 15 ist schlittenförmig geführt und fährt als Isolationsteil in den Kontaktbereich hinein, so dass die geforderte Mindestspannungsfestigkeit in dem Anwendungsumfeld neben der Funkenstrecke auch von dem offenen Schalter 6 der Triggerschaltung eingehalten wird.

Die Figur 4 zeigt auch einen weiteren Schieber 17, der zum Beispiel auf das Auslösekriterium Impulsbelastung oder die Belastung eines in Reihe geschalteten Bauteiles reagieren kann.

Dieser Schieber 17 kann die Triggerschaltung unabhängig von dem Zustand des Schmelzdrahtes 8 unterbrechen.

Der Schmelzdraht 8 kann auch neben einer Strombelastung auf eine thermische oder eine Druckbelastung reagieren, so dass verschiedene Kriterien der Belastung der Funkenstrecke oder eines in Reihe geschalteten Gerätes zur Abtrennung der Triggerschaltung herangezogen werden können.

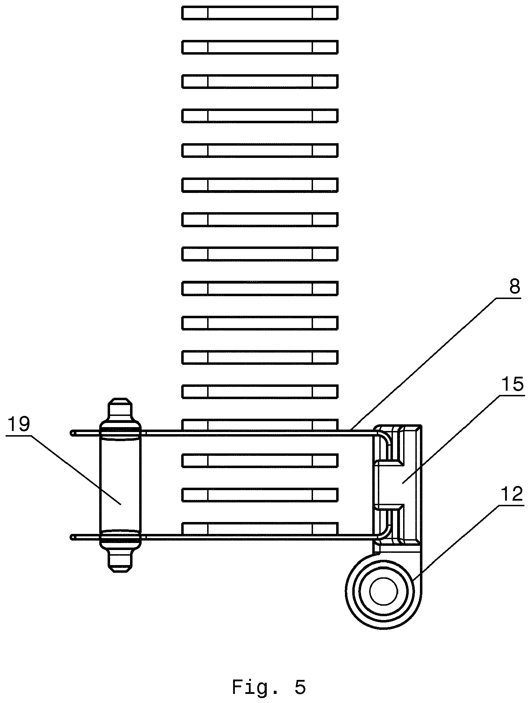

Die Figur 5 zeigt eine Darstellung einer beispielhaften seitlichen Befestigung eines Schiebers 15 am Schmelzleiter 8 und dessen Führung und Kontaktierung an den Deionplatten der Deionkammer.

Die Kontaktierung erfolgt im gezeigten Fall zwischen vier Platten, so dass bei Lichtbogenaufteilung in der Löschkammer der Schmelzleiter mit einer Spannung von ca. 60 V belastet wird, wodurch sich entsprechend dem Widerstand eine Strombelastung für den Schmelzleiter ergibt.

Der Gesamtstrom kann bei kleinen Werten komplett durch den Draht geführt werden, während bei hohen Stromstärken sich der Strom beim Einlaufen des Lichtbogens und nach der Aufteilung des Lichtbogens aufteilt. Die höchste Strombelastung für den Draht ergibt sich hierbei sehr kurzzeitig vor der Aufteilung in Teillichtbögen, da für diesen Vorgang eine gewisse Überhöhung der Lichtbogenspannung notwendig ist.

Soll die gezeigte Anordnung für eine mehrfache Folgestrombelastung ausgelegt werden, darf der Schmelzdraht bei dieser Aufteilungsphase noch nicht überlastet werden, sondern beispielsweise erst bei langen Lichtbogenstandzeiten in der Löschkammer und der damit verbundenen Stromaufteilung auf den Schmelzleiter bzw. auch der Erwärmung der Löschbleche.

Bei einem Widerstand des Schmelzleiterdrahtes von ca. 100 mΩ erfolgt die Aufteilung des Stromes bereits deutlich unterhalb von 1 kA, wodurch das Löschvermögen der Deionkammer kaum beeinträchtigt wird.

Der Strom bzw. der Teilstrom bedingt dabei ein Schmelzen bzw. eine Verformung des Schmelzleiters, wodurch eine Auslösung des Schalters zur Abtrennung der Triggerschaltung möglich ist.

Neben einer direkten Kontaktierung der Lösch- oder Deionbleche sind auch Anordnungen möglich, bei denen der Schmelzleiter erst nach Erreichen von bestimmten Positionen des Lichtbogens in der Löschkammer belastet wird.

Hierzu ist eine Unterbrechung mindestens eines Löschbleches unterhalb der Kontaktierung möglich. Ebenso kann mindestens ein Schmelzleiterdrahtende quasi als Potentialsonde zwischen zwei Deionblechen eingebracht werden. Der Schmelzleiter kann zudem minimal gegenüber einem Deionblech isoliert sein.

Vorstehend geschilderte Varianten gestatten einen Stromfluss erst bei hinreichender Ionisierung oder direktem Kontakt in diesem Bereich. Eine derartige Ausführungsform ist insbesondere bei geringen Abständen zwischen Lichtbogenzündbereich und Deionblechen vorteilhaft, da so ein Stromfluss auch bei großen Impulsströmen, welche den Raum bis hin zu den Deionplatten bereits ionisieren können, vermieden werden kann.

Gemäß der Darstellung nach Figur 5 wird eine seitliche Führung des Schmelzleiters 8 bei entsprechender Kontaktierung an den Löschblechen bevorzugt, wobei aber auch eine axiale Wahl der Vorspannung grundsätzlich möglich ist.

Die seitlichen Führungen des Schmelzleiters nebst radialer Belastung ist insbesondere deshalb vorteilhaft, da in vielen Fällen die Triggerschaltung für die Funkenstrecke seitlich neben der Funkenstrecke angeordnet wird und sich damit in Wirkrichtung befindet.

Bei einer direkten Kontaktierung und damit Brückung von Löschblechen ist zu beachten, dass bei einem niedrigen Widerstand des Schmelzleiterdrahtes, insbesondere bei kleinen Strömen sich zwischen den gebrückten Löschblechen unter Umständen kein Lichtbogen ausbilden kann, da der Spannungsabfall über den Schmelzleiter zu gering ist. Der Schmelzleiter reduziert somit gegebenenfalls die Strombegrenzung. Aus diesem Grunde ist die Anzahl der gebrückten Löschbleche gering zu halten.

Wenn der Schmelzleiter zur Realisierung mechanischer Befestigungsfunktionen im Hinblick auf das federvorgespannte Abtrennelement, zum Beispiel ausgebildet als Schieber, teilweise außerhalb der Deionkammer geführt ist, muss beachtet werden, dass bei einer vollständigen Kommutierung des Stromes auf dem Schmelzleiter ein Lichtbogen außerhalb der Lichtbogenbrennkammer bzw. der Deionkammer entstehen kann, und zwar insbesondere im Bereich der mechanischen Belastung des Schmelzleiters.

Damit der Lichtbogen außerhalb der Lichtbogenkammer nicht zur Beschädigung oder Brückung der Kammer führt, können insbesondere bei Deionkammern zusätzliche Maßnahmen die Zündung von Teillichtbögen zwischen den gebrückten Blechen fördern. Hierfür können Gaskanäle aus dem Bereich der Schmelzleiterführung zwischen die Löschbleche geführt werden, so dass bei einer externen Lichtbogenbildung Plasma zwischen die Löschbleche gelangt.

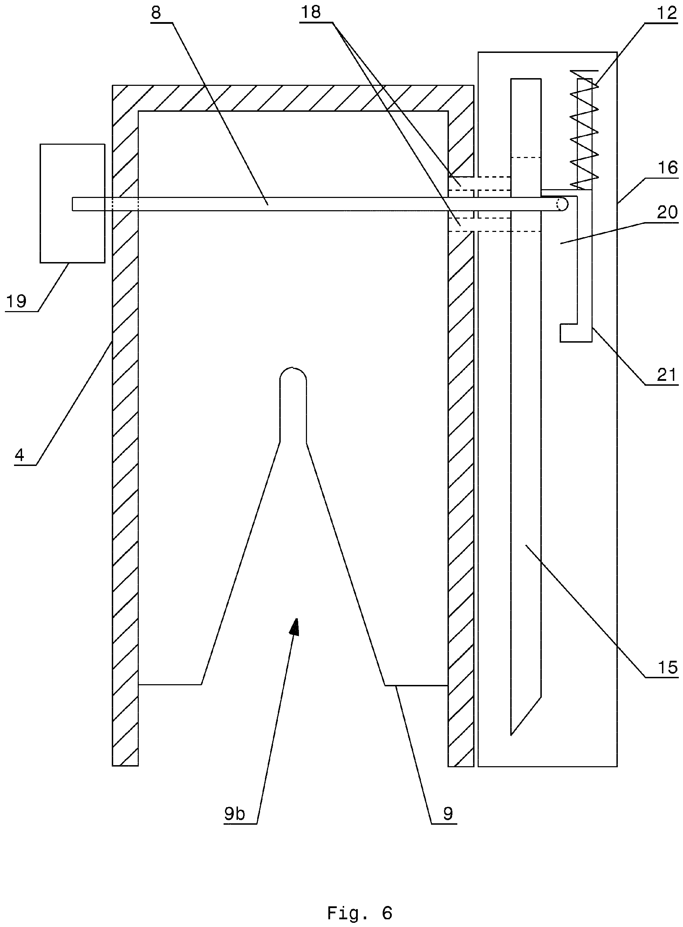

Eine derartige prinzipielle Ausführungsform zeigt die Figur 6.

Gemäß der dortigen Darstellung sind Eintrittsöffnungen oder Einströmkanäle 18 vorhanden. Im Bereich der mechanischen Fixierung des dort gezeigten Schiebers wird der Schmelzdraht 8 außerhalb der Deionkammer 4 mit einer Federkraft 12 radial zu seiner Führung belastet und am Führungsteil 19 fixiert. Dies führt bei einer nicht-adiabatischen Belastung gegebenenfalls zu einer mechanischen Dehnung, welche die Lichtbogenbildung in dem Bereich der Dehnung 20 bedingt. Der Bereich 20 kann durch ein Abdeckteil 21 abgeschottet werden, wodurch entstehendes Plasma durch die Öffnungen 18 zwischen die Deionplatten 9 geführt werden kann. Dies unterstützt die Lichtbogenbildung in diesem Bereich auch bei kleinen Strömen.

Weiterhin besteht die Möglichkeit, Teile des Schmelzleiterdrahtes 8 so zu gestalten und zwischen die Platten zu führen, dass eine Lichtbogenbildung direkt zwischen den Platten 9 erfolgt. Dies ist beispielsweise durch Engstellen am Schmelzleiter bzw. durch Öffnungen in Form von Bohrungen oder Schlitzen in den Deionplatten 9 möglich, durch welche der Schmelzleiterdraht oder ein weiterer Hilfsdraht 22, der nachträglich schmilzt, geführt wird.

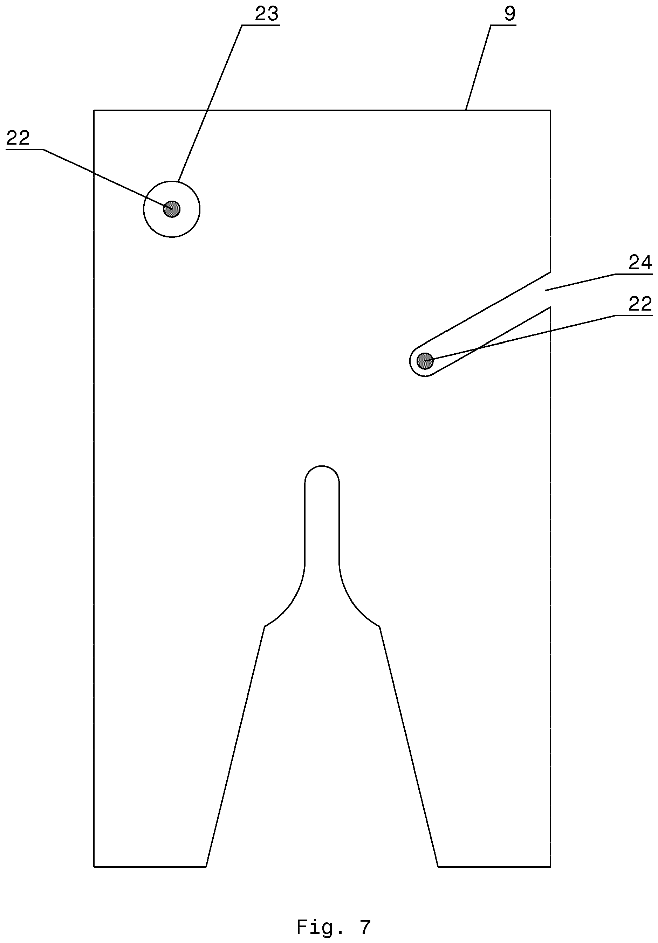

Eine derartige Weiterbildung der Erfindung zeigt die Figur 7 mit beispielhaften Öffnungen 23 und 24 in einem Deionblech 9.

Die Zündung eines Lichtbogens in der Deionkammer kann auch dadurch erfolgen, dass bei der Lichtbogenbildung am Schmelzdraht außerhalb der Lichtbogenkammer der Lichtbogen zwischen dem ersten kontaktierten Deionblech und einer relativ nahen Hörnerelektrode rückzündet und der Lichtbogen im Bereich der gebrückten Bleche erneut in die Kammer einläuft. Dies ist insbesondere bei der Brückung von Blechen an einem Rand der Kammer möglich, der hierdurch die Lichtbogenspannung bei der Rückzündung kaum oder nur sehr kurz abgesenkt wird.

Durch die Impedanz des Bypasses zumindest zu Teilbereichen der Lichtbogenkammer liegt neben einer Abstimmung der Stromaufteilung auch eine Spannungssteuerung vor, welche über die benötigte Lichtbogenspannung und den Spannungsabfall über der Impedanz erfolgt. Diese ist ebenso stromabhängig wie die Impedanzen selbst.

Die Ausführungen zur Abstimmung der Impedanz über das Drahtmaterial, die Kontaktierung und die Geometrie des Drahtes, das heißt des Schmelzleiters, sowie der Spannungsbelastung durch die Anzahl der gebrückten Bleche sind nur als beispielhafte Ausführungen zu betrachten. Selbstverständlich können hier auch unterstützend diskrete Bauteile mit linearem oder nicht-linearem Verhalten zur Höhe oder zeitlichen Steuerung der Belastung genutzt werden. Ebenso können spannungsbegrenzende bzw. spannungsschaltende Elemente zur Steuerung der Schmelzdrahtbelastung anstelle eines Spannungsabgriffes infolge der Brückung einer unterschiedlichen Anzahl von Löschblechen verwendet werden, ohne den Grundgedanken der Erfindung zu verändern.

Die Anordnungen gemäß den Figuren 4 bis 7 sind insbesondere geeignet, das Netzstromverhalten bezüglich der Zeitdauer, Höhe aber auch der Schmelzintegrale zu bewerten. Diese Ausführungsformen sind daher für einzelne triggerbare Funkenstrecken aber auch für deren Reihenschaltung besonders geeignet.

Ist bereits das Auftreten eines Folgestromes relativ geringer Höhe als Fehlerkriterium hinreichend, sind Ausbildungen gemäß den Figuren 2 und 3 nutzbar.

Dies ist beispielsweise bei einer Anordnung aus Reihenschaltung Varistor mit triggerbarer Funkenstrecke der Fall. Hier kann das Einlaufen eines Netzfolgestromes in die Löschkammer, also die Unterscheidung zum Impulsstrom, bereits als hinreichendes Auslösekriterium genutzt werden, wodurch der I²t-Wert des Schmelzleiters sehr klein gehalten werden kann.

Soll bei einer Reihenschaltung von Funkenstrecken oder bei einer einzelnen Funkenstrecke eine Überlastungsgefahr detektiert werden, ist die Unterscheidung eines fehlerhaften Folgestromverhaltens von einem Folgestromverhalten bei normaler Funktion im zulässigen Betriebs- oder Leistungsbereich notwendig.

Die Funkenstrecke besitzt bezüglich ihres normalen Löschverhaltens bei Folgestrom ein maximal auftretendes Löschintegral, welches im Allgemeinen bei maximaler zulässiger Betriebsspannung und maximal zulässigem prospektivem Kurzschlussstrom des Netzes auftritt. Dieser bekannte Wert wird unter anderem zur Ausweisung der Selektivität zu einer minimalen Vorsicherung im Längszweig genutzt. Zwischen beiden Werten wird im Allgemeinen noch ein Sicherheitsfaktor berücksichtigt.

Besteht die Gefahr, dass der vorgenannte Wert erreicht oder sogar überschritten werden kann, besteht die Notwendigkeit, die Funkenstrecke abzutrennen. Die Belastung des Schmelzleiters wird daher so dimensioniert, dass bei Überschreitung des Strombegrenzungsintegrals des Ableiters eine Auslösung erfolgt.

Es ist darauf hinzuweisen, dass dieser Grenzwert nicht mit der Leistungsfähigkeit der Funkenstrecke gleichgesetzt werden darf. Die Funkenstrecke ist grundsätzlich in der Lage, diese und auch höhere Belastungen noch mehrfach sicher zu löschen. Beispielsweise werden die Löschbleche in der Deionkammer so dimensioniert, dass erst bei Integralen mit ca. dem zwei- bis dreifachen Wert die Temperatur der Bleche die Schmelztemperatur des angrenzenden Isolationsmaterials des Gehäuses bzw. anderer Tragkörper kurzzeitig erreicht.

Das gewünschte Auslöseverhalten des Schmelzleiters kann durch das Material im Sinne des Widerstandswertes des Querschnittes usw. beeinflusst werden. Bei hohem spezifischen Widerstand bzw. einer Widerstandserhöhung der Strombelastung ist es vorteilhaft, dass die Spannung, welche den Strom durch den Draht treibt, eine gewisse Höhe besitzt, damit der Strom nicht auf einen unkritischen Wert durch die Widerstandserhöhung bei positiven Temperaturgradienten reduziert werden kann.

Die Spannung zwischen zwei Deionblechen ist in gewissen Grenzen abhängig vom Material, dem Strom und der Kühlung. In einem ungünstigen Fall kann die Spannung unter 20 V sinken. Um unter solchen Umständen sicher eine Überlastung für die Schmelzleiter herbeizuführen, ist die Kontaktierung zwischen mehreren Deionblechen möglich, wodurch die treibende Spannung auf ein Vielfaches erhöht werden kann.

Es können jedoch auch Materialien mit geringer Temperaturabhängigkeit oder negativen Temperaturgradienten bezüglich des Widerstandswertes eingesetzt werden.

Der Schmelzleiterdraht selber kann bei Kontaktierung an die Bleche geklemmt, geschweißt oder gelötet werden.

Einzelne Kontaktierungen erlauben zusätzlich auch eine thermische Auslösung, welche mit der Gesamtbelastung der Funkenstrecke gekoppelt sein kann.

Eine solche thermische Auslösung kann mit einer Zustandsänderung des Schmelzleiters 6, zum Beispiel im Sinne einer Ausdehnung oder Verkürzung bewirkt werden.

Neben dem Einsatz von Schmelzleiterdrähten, welche durch Stromfluss überlastet werden bzw. thermisch auslösbar sind, können auch Materialien mit einer Formänderung genutzt werden. Materialien auf der Basis einer Formgedächtnislegierung können sowohl adiabatisch, zum Beispiel wie Drähte überlastet werden, besitzen jedoch den Vorteil, dass beispielsweise auch kleine Ströme bereits hinreichende Zugkräfte erzeugen können. Der Schmelzleiterdraht kann in axialer Richtung, aber auch in radialer Richtung mechanisch vorgespannt sein. Bei Drähten mit einem Durchmesser von ≤ 200 µm können Zugkräfte bis zu mehreren Newton dauerhaft gehalten werden, die zur Betätigung der Abtrennvorrichtung bzw. des Schalters nutzbar sind.

## Patentansprüche

1. Überspannungsschutzanordnung, umfassend eine in einem isolierenden Gehäuse befindliche Hörnerfunkenstrecke mit Deionkammer (4) zur Lichtbogenlöschung, wobei die Deionkammer (4) eine Vielzahl von beabstandeten Löschblechen (9) aufweist und im Zündbereich der Hörnerfunkenstrecke eine Triggerelektrode (7) befindlich ist,
**dadurch gekennzeichnet, dass**
ein Abtrennelement (6) vorgesehen ist, welches eingerichtet ist, eine Verbindung einer Triggerschaltung (2) zur Triggerelektrode zu unterbrechen und somit die Triggerelektrode (7) abzutrennen, wobei das Abtrennelement (6) von einer im Bereich der Deionkammer befindlichen Bewertungseinheit (5) auslösbar oder steuerbar ist.

2. Überspannungsschutzanordnung nach Anspruch 1,
**dadurch gekennzeichnet, dass**
die Triggerelektrode (7) über ein spannungsbegrenzendes oder spannungsschaltendes Element mit einer der Hauptelektroden (30) der Hörnerfunkenstrecke (1) in Verbindung steht und diese Verbindung mittels des Abtrennelementes (6) unterbrechbar ist.

3. Überspannungsschutzanordnung nach einem der vorhergehenden Ansprüche, wobei die Bewertungseinheit (5) einen Schmelzleiter (5; 8; 81) aufweist, welcher im Bereich der Deionkammer (4) befindlich und dort einer netzfolgestrombedingten Belastung ausgesetzt ist, wobei eine Abtrennvorrichtung vorgesehen ist, die einen, bevorzugt federkraftunterstützten, Schieber (15) aufweist und der Schmelzleiter (5; 8; 81) den Schieber (15) in einer ersten Position hält und beim Schmelzen freigibt, derart, dass der Schieber (15) eine zweite Position einnimmt, wobei mit dem Erreichen der zweiten Position das Abtrennelement (6) auslösbar und eine elektrische Verbindung zur Triggerelektrode (7) unterbrechbar und somit die Triggerelektrode (7) abtrennbar ist.

4. Überspannungsschutzanordnung nach Anspruch 3,
**dadurch gekennzeichnet, dass**
der Schmelzleiter (8; 81) mit beabstandeten Löschblechen (9) der Deionkammer (4) kontaktiert ist.

5. Überspannungsschutzanordnung nach Anspruch 2,
**dadurch gekennzeichnet, dass**
das spannungsschaltende Element als Gasableiter ausgebildet ist.

6. Überspannungsschutzanordnung nach Anspruch 3, **dadurch gekennzeichnet, dass** der Schmelzleiter (81) im Lichtbogeneinlaufbereich (13) der Deionkammer (4; 9) angeordnet ist.

7. Überspannungsschutzanordnung nach Anspruch 3, **dadurch gekennzeichnet, dass** der Schmelzleiter (8) sich im oberhalb eines Zündbereiches der Hörnerfunkenstrecke (1) vorhandenen Volumen (10) befindet.

8. Überspannungsschutzanordnung nach Anspruch 3, **dadurch gekennzeichnet, dass** der Schmelzleiter (8) an einer der Laufschienen oder Hörnerelektroden (30; 31) der Funkenstrecke (1) angeschlossen ist.

9. Überspannungsschutzanordnung nach Anspruch 3, **dadurch gekennzeichnet, dass** der Schieber (15) seitlich neben der Deionkammer (4) angeordnet ist.

10. Überspannungsschutzanordnung nach Anspruch 3, **dadurch gekennzeichnet, dass** der Schieber (15) weitgehend innerhalb der Deionkammer (4) angeordnet ist.

11. Überspannungsschutzanordnung nach Anspruch 3,
**dadurch gekennzeichnet, dass**
der Schmelzleiter (81) potentialfrei im Lichtbogeneinlaufbereich oder der Deionkammer (4) angeordnet ist.

12. Überspannungsschutzanordnung nach Anspruch 3, **dadurch gekennzeichnet, dass** der Schmelzleiter (8; 81) thermosensibel befestigt ist.

13. Überspannungsschutzanordnung nach Anspruch 3,
**dadurch gekennzeichnet, dass**
bei teilweiser Führung des Schmelzleiters (8) außerhalb der Deionkammer (4) zum Aktivieren Einströmöffnungen oder Einströmkanäle (18) für ein bei einer externen Lichtbogenbildung entstehendes Plasma ausgebildet sind.

14. Überspannungsschutzanordnung nach einem der vorhergehenden Ansprüche,
**dadurch gekennzeichnet, dass**
das Abtrennelement (6) als Schalter ausgebildet ist.

15. Überspannungsschutzanordnung nach Anspruch 3, **dadurch gekennzeichnet, dass** ein weiterer Schieber (17) vorgesehen ist, welcher eingerichtet ist, die Schaltverbindung zur Triggerelektrode (7) unabhängig vom Zustand des Schmelzleiters (8) zu unterbrechen.

16. Überspannungsschutzanordnung nach Anspruch 15,
**dadurch gekennzeichnet, dass**
der weitere Schieber (17) eingerichtet ist, auf Impulsbelastung oder die Belastung des spannungsbegrenzenden oder spannungsschaltenden Elementes (2) anzusprechen.

## Claims

1. Overvoltage protection arrangement, comprising a horn spark gap which is located in an insulating housing and has a deionisation chamber (4) for arc quenching, the deionisation chamber (4) having a plurality of spaced-apart quenching plates (9), and a trigger electrode (7) being located in the ignition region of the horn spark gap,
**characterised in that**
a disconnection element (6) is provided, which is set up to interrupt a connection of a trigger circuit (2) to the trigger electrode and thus to disconnect the trigger electrode (7), the disconnection element (6) being actuable or controllable by an evaluation unit (5) located in the region of the deionisation chamber.

2. Overvoltage protection arrangement according to claim 1,
**characterised in that**
the trigger electrode (7) is connected to one of the main electrodes (30) of the horn spark gap (1) via a voltage-limiting or voltage-switching element, and this connection can be interrupted by means of the disconnection element (6).

3. Overvoltage protection arrangement according to any of the preceding claims, wherein the evaluation unit (5) has a melting strip (5; 8; 81), which is located in the region of the deionisation chamber (4), where it is exposed to a load due to secondary mains current, a disconnection device being provided which has a slider (15), preferably assisted by spring force, and the melting strip (5; 8; 81) holding the slider (15) in a first position and releasing it upon melting in such a way that the slider (15) takes on a second position, the disconnection element (6) being triggerable, and an electrical connection to the trigger electrode (7) being interruptible and the trigger electrode (7) thus being disconnectable, when the second position is reached.

4. Overvoltage protection arrangement according to claim 3,
**characterised in that**
the melting strip (8; 81) is contacted with spaced-apart quenching plates (9) of the deionisation chamber (4).

5. Overvoltage protection arrangement according to claim 2,
**characterised in that**
the voltage-switching element is formed as a gas discharge tube.

6. Overvoltage protection arrangement according to claim 3,
**characterised in that** the melting strip (81) is arranged in the arc entry region (13) of the deionisation chamber (4; 6).

7. Overvoltage protection arrangement according to claim 3,
**characterised in that** the melting strip (8) is located in the volume (10) above an ignition region of the horn spark gap (1).

8. Overvoltage protection arrangement according to claim 3,
**characterised in that** the melting strip (8) is connected to one of the runners or horn electrodes (30; 31) of the spark gap (1).

9. Overvoltage protection arrangement according to claim 3, **characterised in that** the slider (15) is arranged laterally alongside the deionisation chamber (4).

10. Overvoltage protection arrangement according to claim 3,
**characterised in that** the slider (15) is arranged largely inside the deionisation chamber (4).

11. Overvoltage protection arrangement according to claim 3,
**characterised in that**
the melting strip (81) is arranged in the arc entry region or the deionisation chamber (4) so as to be potential-free.

12. Overvoltage protection arrangement according to claim 3,
**characterised in that** the melting strip (8; 81) is fastened in a heat-sensitive manner.

13. Overvoltage protection arrangement according to claim 3,
**characterised in that**,
if part of the melting strip (8) passes outside the deionisation chamber (4) for activation, inlet openings or inlet ducts (18) are formed for a plasma which occurs in the event of external arc formation.

14. Overvoltage protection arrangement according to any of the preceding claims,
**characterised in that**
the disconnection element (6) is formed as a switch.

15. Overvoltage protection arrangement according to claim 3,
**characterised in that** a further slider (17) is provided, which is set up to interrupt the connection to the trigger electrode (7) independently of the state of the melting strip (8).

16. Overvoltage protection arrangement according to claim 15,
**characterised in that**
the further slider (17) is set up to react to pulse loading or to the loading of the voltage-limiting or voltage-switching element (2).

## Revendications

1. Agencement de protection contre les surtensions, comprenant un éclateur à cornes situé dans un boîtier isolant avec une chambre de désionisation (4) pour l'extinction de l'arc électrique, la chambre de désionisation (4) présentant une pluralité de tôles d'extinction (9) espacées et une électrode de déclenchement (7) étant située dans la zone d'allumage de l'éclateur à cornes,
**caractérisé en ce qu'**il est prévu un élément de séparation (6) qui est conçu pour interrompre une liaison entre un circuit de déclenchement (2) et l'électrode de déclenchement et ainsi séparer l'électrode de déclenchement (7), l'élément de séparation (6) pouvant être déclenché ou commandé par une unité d'évaluation (5) située dans la zone de la chambre de désionisation.

2. Agencement de protection contre les surtensions selon la revendication 1, **caractérisé en ce que** l'électrode de déclenchement (7) est reliée à l'une des électrodes principales (30) de l'éclateur à cornes (1) par l'intermédiaire d'un élément de limitation de tension ou de commutation de tension et cette liaison peut être interrompue au moyen de l'élément de séparation (6).

3. Agencement de protection contre les surtensions selon l'une des revendications précédentes, dans lequel l'unité d'évaluation (5) présente un conducteur fusible (5 ; 8 ; 81) qui est situé au niveau de la chambre de désionisation (4) et y est exposé à une charge due au courant de suite du réseau, dans lequel il est prévu un dispositif de séparation qui présente un coulisseau (15), de préférence assisté par la force d'un ressort, et le conducteur fusible (5 ; 8 ; 81) maintient le coulisseau (15) dans une première position et le libère lors de la fusion, de telle sorte que le coulisseau (15) prenne une deuxième position, dans lequel l'élément de séparation (6) peut être déclenché et une liaison électrique avec l'électrode de déclenchement (7) peut être interrompue, et l'électrode de déclenchement (7) ainsi être séparée, lorsque la deuxième position est atteinte.

4. Agencement de protection contre les surtensions selon la revendication 3, **caractérisé en ce que** le conducteur fusible (8 ; 81) est en contact avec des tôles d'extinction (9) espacées de la chambre de désionisation (4) .

5. Agencement de protection contre les surtensions selon la revendication 2, **caractérisé en ce que** l'élément de commutation de tension est réalisé sous la forme d'un parasurtenseur à gaz.

6. Agencement de protection contre les surtensions selon la revendication 3, **caractérisé en ce que** le conducteur fusible (81) est disposé potentiel dans la zone d'entrée d'arc (13) de la chambre de désionisation (4 ; 9).

7. Agencement de protection contre les surtensions selon la revendication 3, **caractérisé en ce que** le conducteur fusible (8) est situé dans le volume (10) présent au-dessus d'une zone d'allumage de l'éclateur à cornes (1).

8. Agencement de protection contre les surtensions selon la revendication 3, **caractérisé en ce que** le conducteur fusible (8) est raccordé à l'un des rails de guidage ou l'une des électrodes en corne (30 ; 31) de l'éclateur (1) .

9. Agencement de protection contre les surtensions selon la revendication 3, **caractérisé en ce que** le coulisseau (15) est disposé latéralement à côté de la chambre de désionisation (4).

10. Agencement de protection contre les surtensions selon la revendication 3, **caractérisé en ce que** le coulisseau (15) est disposé en grande partie à l'intérieur de la chambre de désionisation (4).

11. Agencement de protection contre les surtensions selon la revendication 3, **caractérisé en ce que** le conducteur fusible (81) est disposé sans potentiel dans la zone d'entrée de l'arc électrique ou dans la chambre de désionisation (4).

12. Agencement de protection contre les surtensions selon la revendication 3, **caractérisé en ce que** le conducteur fusible (8 ; 81) est fixé de manière thermosensible.

13. Agencement de protection contre les surtensions selon la revendication 3, **caractérisé en ce que**, en cas de guidage partiel du conducteur fusible (8) à l'extérieur de la chambre de désionisation (4), pour l'activation, des ouvertures d'entrée ou des canaux d'entrée (18) sont réalisés pour un plasma qui se produit lors d'une formation d'arc électrique externe.

14. Agencement de protection contre les surtensions selon l'une des revendications précédentes, **caractérisé en ce que** l'élément de séparation (6) est réalisé sous la forme d'un commutateur.

15. Agencement de protection contre les surtensions selon la revendication 3, **caractérisé en ce qu'**il est prévu un autre coulisseau (17) qui est conçu pour interrompre la liaison de commutation vers l'électrode de déclenchement (7) indépendamment de l'état du conducteur fusible (8).

16. Agencement de protection contre les surtensions selon la revendication 15, **caractérisé en ce que** l'autre coulisseau (17) est conçu pour réagir à une charge d'impulsion ou à la charge de l'élément de limitation de tension ou de commutation de tension (2).
